# FASCICULE DE BREVET EUROPEEN

(11) **EP 2 867 033 B1**
(45) Date de publication et mention de la délivrance du brevet: **04.01.2017**
(21) Numéro de dépôt: 13730540.5
(22) Date de dépôt: 19.06.2013
(51) Int. Cl.: B60C 3/08, B60C 15/04

(54) **PNEUMATIQUE PLIABLE, PROCEDE DE PLIAGE ET UTILISATION**
FALTBARER REIFEN, FALTVERFAHREN UND VERWENDUNG
FOLDABLE TYRE, FOLDING METHOD AND USE

(30) Priorité: 27.06.2012 FR 1256127
(43) Date de publication de la demande: 06.05.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: LAURENT, Christophe, F-63040 Clermont-Ferrand Cedex 9 (FR)
(74) Mandataire: Bauvir, Jacques
(86) Numéro de dépôt international: PCT/EP2013/062698
(87) Numéro de publication internationale: WO 2014/001167

(56) Documents cités:
- WO-A1-2010/100088

## Description

L'invention concerne un pneumatique à carcasse radiale ou à carcasse croisée pour véhicule à deux roues motorisé, de type moto, pliable, un procédé de pliage et une utilisation pour véhicule à deux roues motorisé de type moto.

Dans ce qui suit, on désigne par :
- « plan circonférentiel» : un plan perpendiculaire à l'axe de rotation du pneumatique,
- « plan équatorial » : un plan circonférentiel passant par le milieu de la surface de roulement du pneumatique et,
- « plan radial » : un plan qui contient l'axe de rotation du pneumatique,
- « direction axiale » : direction parallèle à l'axe de rotation du pneumatique,
- « direction radiale » : une direction coupant l'axe de rotation du pneumatique et perpendiculaire à celui-ci,
- « direction circonférentielle » : une direction tangente à la surface de la bande de roulement selon le sens de rotation du pneumatique,
- « radialement intérieur à » : plus proche de l'axe de rotation du pneumatique,
- « radialement extérieur à »: plus éloigné de l'axe de rotation du pneumatique.
- « axialement intérieur à » : plus proche du plan équatorial,
- « axialement extérieur à » : plus éloigné du plan équatorial.

Un pneumatique comprend une bande de roulement destinée à venir en contact avec le sol par l'intermédiaire d'une surface de roulement, se prolongeant radialement vers l'intérieur par deux flancs reliés à deux bourrelets destinés à assurer la liaison du pneumatique avec une jante.

Un pneumatique à carcasse radial pour véhicule à deux roues motorisé comprend au moins une armature de carcasse dont chaque extrémité est ancrée dans un bourrelet par retournement autour d'un élément de renforcement circonférentiel appelé tringle, et éventuellement une armature de renforcement comprenant une armature de sommet, radialement intérieure à la bande de roulement.

Le pneumatique à carcasse croisée de véhicule à deux roues motorisé se distingue du pneumatique à carcasse radiale des véhicules à deux roues par le fait que l'angle de la nappe carcasse pris au centre de la bande de roulement est inférieur à 65°.

La tringle peut être formée d'un assemblage de fils élémentaires ou de câbles, eux-mêmes formés d'un assemblage de fils élémentaires.

Lorsqu'elle existe, l'armature de sommet comprend généralement une à deux nappes désignées classiquement « nappe de sommet ». Ces nappes de sommet peuvent le plus souvent être comparées à un sandwich de câbles textile pris entre deux couches de gomme.

Dans le cas d'un pneumatique pour véhicule à deux roues motorisé, l'épaisseur de l'armature de sommet, constituée essentiellement par l'empilage radial de l'éventuelle armature de sommet et de l'armature de carcasse est habituellement comprise entre 2 et 4 mm. Un flanc de pneumatique pour deux roues motorisées a généralement une épaisseur comprise entre 2 et 7 mm, lorsqu'on définit par l'épaisseur du flanc, l'épaisseur du flanc et celle de la nappe carcasse.

Il est déjà connu du document WO10/100088 un pneumatique pliable pour bicyclette comprenant une armature de carcasse dont chaque extrémité est ancrée dans deux bourrelets par retournement autour d'un élément de renfort, appelé tringle. Chaque bourrelet est prolongé radialement par des flancs rejoignant une bande de roulement. Ce pneumatique comprend une tringle formée par enroulement d'un câble métallique saturé et non fretté, formé de filaments.

Contrairement aux pneumatiques pour bicyclette dont la vitesse est de façon implicite limitée à 100km/h (car il n'existe pas d'indice de vitesse sur les pneumatique de bicyclette), les pneumatiques pour deux roues motorisés peuvent atteindre des vitesses allant jusqu'à plus de 300km/h.

Par ailleurs, lorsque les pneumatiques sont fabriqués sur des lieux de productions éloignés des lieux de vente, il est nécessaire de les transporter. Lors de leur transport, même s'ils sont comprimés ensemble, les pneumatiques occupent encore un volume important.

En effet, un mode de conditionnement utilisé actuellement consiste tout d'abord à disposer verticalement et linéairement une première rangée de pneumatiques formant un angle d'inclinaison avec le sol de manière à les superposer partiellement. D'autres pneumatiques sont ensuite incorporés et enfoncés dans la partie de l'orifice laissée libre de chaque pneumatique de la première rangée, formant ainsi une seconde rangée. Un tel mode de conditionnement permet d'ajouter 30% de pneumatique par m³ en plus par rapport à un rangement dans lequel les pneumatiques sont disposés côte à côte sans déformation. Un autre mode de stockage consiste à stocker les pneumatiques de manière verticale et de les relier par groupe de cinq.

Aussi il subsiste le besoin de pouvoir conditionner un ou plusieurs pneumatiques pour véhicule à deux roues motorisé non montés sur jante, de manière plus ou moins compacte, le temps de leur transport et/ou de leur stockage, sans endommager leur structure interne, tout en leur permettant de retrouver très rapidement leur forme initiale après dépliage.

L'invention a donc pour objet un pneumatique pliable pour véhicule à deux roues motorisé comportant une armature de carcasse surmontée éventuellement radialement à l'extérieur d'une armature de sommet inextensible, elle-même radialement à l'intérieur d'une bande de roulement, lesdites armatures étant chacune constituées d'au moins une couche d'éléments de renforcement, ladite bande de roulement étant reliée à deux bourrelets par l'intermédiaire de deux flancs, lesdits bourrelets étant destinés à entrer en contact avec une jante, chaque bourrelet comportant au moins un élément de renforcement circonférentiel inextensible, appelé tringle, ladite tringle définissant une ligne moyenne formant une courbe fermée sensiblement circulaire dans un plan circonférentiel, lesdits flancs présentant une épaisseur comprise entre 2 et 7 mm et ladite armature de sommet présentant une épaisseur comprise entre 2 et 3 mm. L'épaisseur du flanc correspond à l'épaisseur cumulée du flanc et à celui de la nappe carcasse.

La tringle de chaque bourrelet est flexible. Le pneumatique se caractérise en ce qu'après pliage du pneumatique, la ligne moyenne de la tringle comprend au moins une partie concave P_{c} de plus petit rayon R_{c} et de centre de courbure C_{c} et en ce que la tringle comprend au moins un câble métallique, non fretté dont la teneur en carbone est comprise entre 0,5 et 0,9%.

Cet intervalle de valeur en carbone permet d'augmenter la résistance du câble et ainsi réduire le nombre de tours de câble constituant la tringle.

Une tringle est dite flexible lorsque, fléchie dans son plan autour d'une poulie de rayon 10mm, aucun des éléments rigides la constituant n'atteint une déformation permanente.

Selon l'invention, une armature de sommet est inextensible lorsque l'effort, pour la déformer de 5%, est au moins égal à 40N, et une tringle est inextensible lorsque l'effort, pour l'allonger de 1%, est au moins égal à 2500N.

Le pneumatique selon l'invention présente l'avantage de pouvoir augmenter de manière significative le nombre de pneumatiques par unité de volume lors du transport et/ou du stockage, entraînant ainsi un gain économique important.

En effet, le mode de pliage selon l'invention permet un stockage de pneumatique avec un gain de 30% par m³ par rapport notamment au mode de conditionnement de type chaînage, explicité précédemment. Le pneumatique selon l'invention peut être plié, et stocké en vrac ou disposé dans une boîte.

Un autre avantage du pneumatique de l'invention est qu'il peut être soumis et conservé sous différents modes de pliage, quelque soit sa taille. Enfin, le pneumatique selon l'invention peut rester plié le temps de son transport et/ou de son stockage sans aucun impact négatif sur ses performances.

Un autre objet de l'invention est un procédé pour plier un pneumatique tel que défini précédemment, qui consiste à :
a-écarter, dans un plan radial, les bourrelets d'une première moitié d'un pneumatique selon une direction axiale vers un axe tangent au centre de la bande de roulement,
b- à appliquer une force selon deux directions radiales, parallèles et de sens identique, en deux points espacés de la bande de roulement d'une première moitié (M₁) de manière à rapprocher la première moitié (M₁) de la bande de roulement écartée d'une seconde moitié (M₂) opposée de la première moitié (M₁) en cesdits deux points, formant ainsi un première et une seconde zone de rapprochement, tout en maintenant simultanément la bande de roulement entre cesdits deux points sous la forme d'une protubérance,
c- à disposer la partie interne de ladite protubérance de part et d'autre d'un premier axe vertical, fixe et simultanément à mettre en appui sur un troisième axe vertical une desdites zones de rapprochement, ledit premier axe étant disposé diamétralement à un second axe, lesdits premier et second axes verticaux étant placés sur un moyen plan pouvant fonctionner en rotation,
d- à effectuer au moins une rotation du moyen plan afin de plier par enroulage le pneumatique sur lui-même autour des premier et troisième axes vertical.

Par l'étape d'écartement, on considère une augmentation de la distance axiale entre les bourrelets.

Enfin, l'invention a pour dernier objet une utilisation du pneumatique tel que défini précédemment pour véhicule à deux roues de type moto.

La tringle de chaque bourrelet est de préférence formée par enroulement d'au moins un câble métallique, formé de filaments, saturé et non fretté dont le diamètre du câble est de préférence inférieur à 0,22mm. Cette tringle est dimensionnée de telle façon que la pression d'éclatement soit supérieure aux capacités des outils de gonflage automatique dont la pression maximale est comprise entre 10 et 12bars.

La capacité à pouvoir plier le câble est fonction du nombre de câbles métalliques posés. De manière préférée, on utilise un câble en acier à très haute résistance (entre 1700N et 2200N.) afin de réduire le nombre de tours de câbles posés. Ceci a pour avantage par ailleurs de réduire la masse des pneumatiques pliés, qui peuvent dans certains cas être limités par leur masse (la tringle représentant entre 5 et 10% de la masse totale d'un pneumatique) alors qu'ils sont limités par le volume lorsqu'ils sont transports non pliés.

La ligne moyenne de la tringle comprend en outre au moins deux points d'inflexion I₁, I₂ délimitant la partie concave P_{c}.

La ligne moyenne de la tringle comprend en outre au moins deux parties convexes Pₓ₁, Pₓ₂ ayant deux plus petits rayons R_{x1,} Rₓ₂ et deux centres de courbure Cₓ₁, Cₓ₂. De préférence, des droites D₁, D₂ reliant respectivement le centre de courbure C_{c1} de la partie concave P_{c} à chacun des centres de courbures Cₓ₁, Cₓ₂ des parties convexes forment un angle α compris entre 5 et 130°.

La partie concave P_{c} est définie par un centre de courbure à l'extérieur de la ligne moyenne fermée de la tringle. La partie convexe Pₓ est définie par un centre de courbure à l'intérieur de la ligne moyenne fermée de la tringle.

La ligne moyenne de la tringle de chaque bourrelet est de préférence formée par enroulement d'un câble métallique, formé de filaments. Le diamètre du câble est de préférence inférieur à 1,5mm, et est non fretté. Le diamètre des filaments est de préférence inférieur à 0,22mm.

Un câble est dit « non fretté » lorsque qu'il ne comporte pas un filament supplémentaire enroulé en hélice sur la surface externe dudit câble. Un filament de frette est usuellement choisi avec un diamètre inférieur à celui des filaments du câble et est enroulé selon un pas réduit et dans un sens opposé ou identique à celui de l'enroulement des fils formant la surface externe du câble. La fonction première d'une frette est de limiter le flambage du câble.

De préférence également, le diamètre des fils ou filaments formant le câble est inférieur à 0.22 mm. De tels diamètres des filaments vont encore contribués à la souplesse du câble et limiter les efforts nécessaires pour plier le pneumatique.

Un mode de réalisation avantageux de l'invention prévoit que le module en traction du câble est supérieur à 150 GPa.

Avantageusement encore, le câble est pliable selon un rayon de courbure compris entre 2 et 5 mm sans présenter de déformation qui rendrait le pneumatique non utilisable. De préférence, il est pliable selon un rayon de courbure inférieur à 3 mm sans présenter de déformation qui rendrait le pneumatique non utilisable.

Selon une variante de réalisation de l'invention, le câble est un câble métallique à couches de construction [L+M] ou [L+M+N] comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

Lorsque L est égal à 1, la première couche forme une âme centrale constituée d'un fil métallique de diamètre d₁.

Avantageusement selon cette variante de réalisation, le pas p₂ et le pas p₃ sont identiques.

Avantageusement encore selon cette variante de réalisation, le câble est un câble métallique 19.20 non fretté de formule 1.22+6.20+12.20, les couches étant formées avec le même sens de rotation et avec des pas identiques. Un tel câble autorise la formation d'une tringle par un enroulement d'un premier tour de 1 à 4 câbles ou de 2 à 4 tours de câbles pour former une première couche, et ainsi de suite pour former n couches. Le nombre n de couches peut être compris entre 1 et 4. Ce nombre de tours/câbles/couches nécessaires est fonction de la dimension du pneumatique et de son usage.

Selon une première variante, après le pliage du pneumatique, la ligne moyenne de la tringle comprend une partie concave P_{c} de plus petit rayon R_{c1} et de centre de courbure C_{c1}. La tringle comprend également deux parties convexes Pₓ₁, Pₓ₂, respectivement de plus petits rayons Rₓ₁, Rₓ₂, et de centres de courbures C_{x1,} Cₓ₂. Les droites D₁, D₂ reliant respectivement le centre de courbure C_{c1} de la partie concave P_{c} à chacun des centres de courbures Cₓ₁, Cₓ₂, de la partie convexe Pₓ forment un angle α compris entre 5 et 40°. La forme géométrique du pneumatique plié selon cette première variante ressemble sensiblement à une forme en « U » ou en « J » selon que les droites D₁ et D₂ sont de même longueur ou de longueur différente.

Selon une seconde variante, de préférence, après le pliage du pneumatique, la ligne moyenne de la tringle comprend une partie concave P_{c} de plus petit rayon R_{c1} et de centre de courbure C_{c1}. La tringle comprend deux parties convexes Pₓ₁, Pₓ₂, respectivement de plus petits rayons Rₓ₁, Rₓ₂, et de centres de courbures Cₓ₁, Cₓ₂. Les droites D₁, D₂ reliant respectivement le centre de courbure C_{c1} de la partie concave P_{c} à chacun des centres de courbures Cₓ₁, Cₓ₂, de la partie convexe Pₓ peuvent former un angle α compris entre 50 et 85°, et sont de préférence de longueur différente. La forme géométrique du pneumatique plié selon cette seconde variante de pliage ressemble sensiblement à une forme en spirale.

Enfin, selon une dernière variante de l'invention, après le pliage du pneumatique, la ligne moyenne de la tringle peut comprendre deux parties concaves P_{c1}, P_{c2} respectivement de plus petits rayons R_{c1}, R_{c2} et de centres de courbures C_{c1}, C_{c2}. Elle comprend également deux parties convexes Pₓ₁, Pₓ₂, respectivement de plus petits rayons Rₓ₁, Rₓ₂, et de centres de courbures Cₓ₁, Cₓ₂. Les droites D₁, D₂ reliant respectivement le centre de courbure C_{c1} d'une partie concave à chacun des centres de courbures Cₓ₁ Cₓ₂, des parties convexes Pₓ₁, Pₓ₂ forment de préférence un angle α compris entre 95° et 130°, et ne sont pas de même longueur. La forme géométrique du pneumatique plié selon cette dernière variante ressemble sensiblement à un « S ».

Pour chacune des variantes, l'intervalle de valeurs de l'angle α permet à la fois de garantir que le pneumatique, pour certaines dimensions, ne risque pas de quelconque altération lorsqu'il est plié longtemps, mais également de fournir un gain significatif de compactage.

Lorsqu'il est plié sensiblement en forme de « U » ou de « J », le rapport D₁/D₂ peut être égal à 1.

Lorsqu'il est plié sensiblement en forme de spirale, le rapport D₁/D₂ peut tendre vers zéro. Il est de préférence compris entre 0,15 et 1.

Lorsqu'il est plié sensiblement en forme de « S », le rapport D₁/D₂ peut tendre vers une valeur infinie. Il est de préférence compris entre 1 et 12.

Le pneumatique selon l'invention occupe de préférence après pliage, un volume inférieur à 65% par m³ par rapport au mode de conditionnement par chaînage.

L'invention va maintenant être illustrée à l'aide des différents modes de réalisation détaillés qui suivent et qui ne limitent en aucune manière l'objet de l'invention.

Les différentes mesures qui suivent ont été effectuées sur des pneumatiques, pliés selon l'invention, ayant des dimensions différentes.

- la figure 1 représente une vue schématique en coupe selon un plan radial, d'un pneumatique pour véhicules à deux roues motorisé, non plié,

- la figure 2 représente une vue schématique en coupe, selon un plan circonférentiel, du pneumatique plié de l'invention, selon un premier mode de réalisation,

- la figure 3 représente une vue schématique en coupe, selon un plan circonférentiel, du pneumatique plié de l'invention, selon un second mode de réalisation,

- la figure 4 représente une vue schématique en coupe, selon un plan circonférentiel, du pneumatique plié de l'invention, selon un troisième mode de réalisation,

- les figures 5A à 5F représentent chacune une vue schématique, des différentes étapes d'une méthode de pliage selon l'invention du pneumatique.

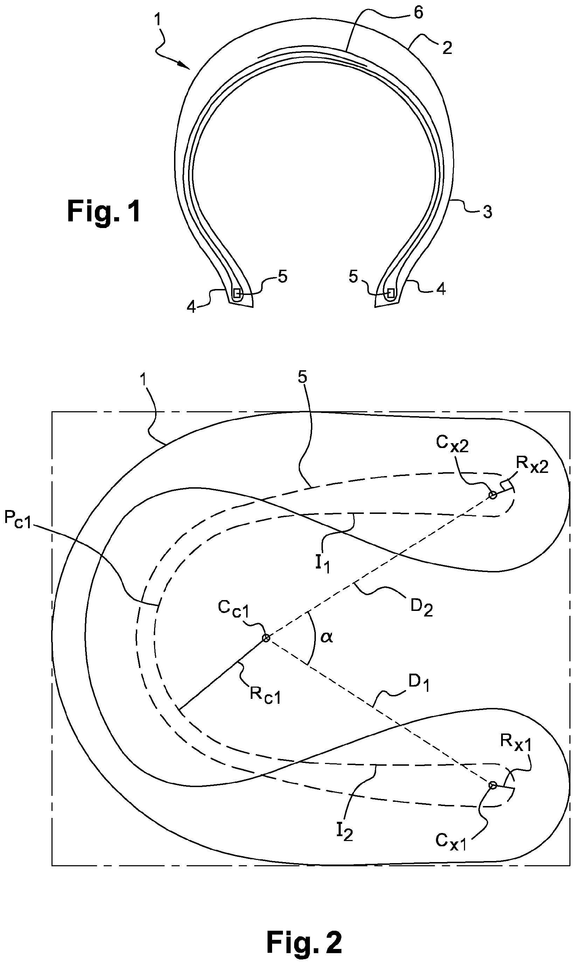

La figure 1 représente un pneumatique de véhicule motocyclette légère, de référence générale 1, non plié comprenant une bande de roulement 2 qui se prolonge radialement vers l'intérieur par deux flancs 3 reliés à deux bourrelets 4, lesdits bourrelets 4 comprenant une tringle 5 (élément de renforcement).

Sur la figure 1, radialement à l'intérieur de la bande de roulement 2 se trouve une nappe carcasse 6. Une nappe de sommet inextensible (non représentée), non systématiquement présente, est disposée radialement à l'extérieure de la nappe carcasse 6.

Lesdites armatures de sommet et de carcasse 6 sont, chacune, constituées d'au moins une couche d'éléments de renforcement (non représenté). La bande de roulement 2 est reliée à deux bourrelets 4 par l'intermédiaire de deux flancs 3. Chaque bourrelet 4 comporte au moins une tringle 5. Cette tringle 5, qui définit une ligne moyenne formant une courbe fermée sensiblement circulaire dans un plan circonférentiel, est inextensible et flexible.

La tringle est de préférence constituée en acier, et se présente sous la forme d'un câble non fretté, formé de filaments ; lesdits filaments étant d'un diamètre égale à 0,20mm. Le câble est un câble métallique 19.20 de formule 1.22+6.20+12.20, les couches étant formées avec le même sens de rotation et avec des pas identiques égaux à 10 mm. Un tel câble autorise la formation d'une tringle par un enroulement de 3 à 16 tours. Le nombre de tours nécessaires est fonction de la dimension du pneumatique et de son usage.

L'épaisseur moyenne E_{F} du flanc (qui cumule celle du flanc et celle de la nappe carcasse) du pneumatique selon l'invention, mesurée, au point situé au milieu selon la direction radiale entre le point haut de la tringle et le point bas du pneumatique sur le plan équatorial, est comprise entre 2 et 7 mm.

L'épaisseur moyenne Eₛ de l'armature de sommet (qui comprend de manière optionnelle une nappe de sommet), mesurée au plan équatorial, est comprise entre 2 et 5mm.

Sur la figure 2, la ligne moyenne de la tringle 5 (représentée en pointillés) du pneumatique, de référence commerciale 150/70-14, plié selon un premier mode de pliage, sensiblement en forme de « U », présente une partie concave P_{c1}, de plus petit rayon R_{c1} égale à 45 mm et un centre de courbure C_{c1}.

La ligne moyenne de la tringle 5 comprend, d'une part, deux points d'inflexion I₁, I₂ qui délimitent la partie concave P_{c1}, et, d'autre part, deux parties convexes Pₓ₁, Pₓ₂ ayant deux plus petits rayons Rₓ₁ compris entre 20 et 30 mm et Rₓ₂ compris entre 20 et 30 mm et deux centres de courbures Cₓ₁ et Cₓ₂.

Deux droites D₁ et D₂, qui relient respectivement le centre de courbure C_{c1} de la partie concave P_{c1} à chacun des centres de courbures Cₓ₁ et Cₓ₂ de la partie convexe Pₓ₁, forment un angle α d'environ 15°. Les droites D₁ et D₂ sont, selon ce mode de pliage, sensiblement de même longueur, et mesurent 240 mm.

Après avoir été pliés selon ce premier mode de pliage, les pneumatiques peuvent en outre être emboîtés les uns dans les autres, voire éventuellement chaînés. Le chaînage permet de maintenir leur compression.

Le tableau I suivant rassemble d'autres mesures effectuées sur la forme de pliage représentée sur la figure 2 (forme en « U »).

**Tableau I**

| **Dimensions du pneumatique** | **Epaisseur du flanc (en mm) E_{F}** | **Epaisseur de l'armature sommet (en mm) E_{S}** | **Angle α (en degré)** | **D₁ (en mm)** | **D₂ (en mm)** | **R_{c1} (en mm)** | **Rₓ₁ (en mm)** | **Rₓ₂ (en mm)** | **D₁/D₂** |
|---|---|---|---|---|---|---|---|---|---|
| 2.00-17 | 2,6 | 2,3 | 5 | 320 | 320 | 30 | 20 | 20 | 1 |
| 150/70-14 | 6 | 4 | 15 | 240 | 240 | 45 | 30 | 30 | 1 |

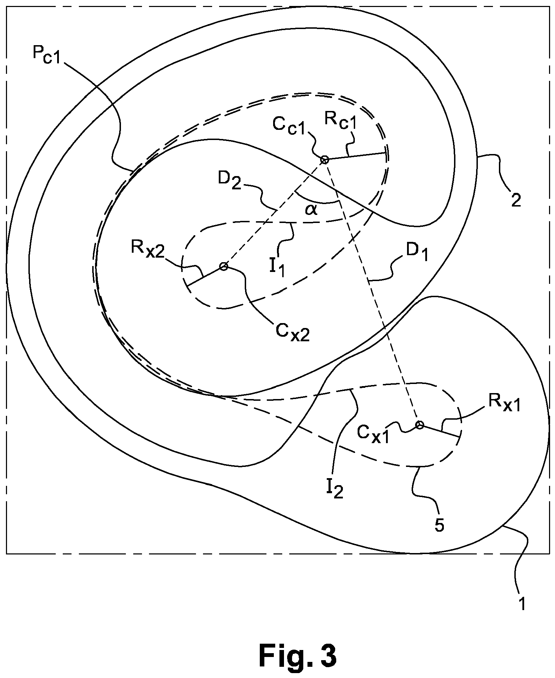

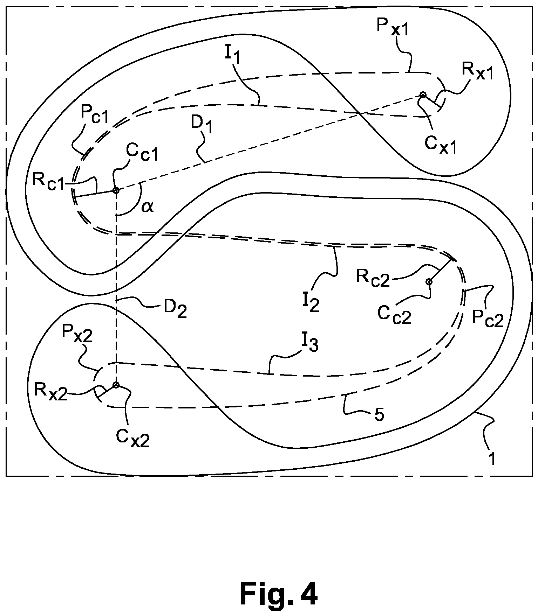

Le pliage du pneumatique 1, tel que représenté sur la figure 3, diffère de celui de la figure 2 en ce que les droites D₁ et D₂ forment un angle α compris entre 50° et 85°, et en ce qu'elles n'ont pas la même longueur. Le pliage telle que représenté selon la figure 4 ressemble sensiblement à la forme d'une spirale.

Le volume qu'occupe le pneumatique est inférieur à 85%, de préférence inférieur à 75% par rapport au volume occupé par les pneumatiques pliés selon des modes de conditionnement actuellement connus.

Le tableau II suivant rassemble les mesures effectuées sur différents pneumatiques selon la forme de pliage représentée sur la figure 3 (forme en spirale).

**Tableau II**

| **Dimensions du pneumatique** | **Epaisseur du flanc (en mm) E_{F}** | **Epaisseur de l'armature sommet (en mm) E_{S}** | **Angle α (en degré)** | **D₁ (en mm)** | **D₂ (en mm)** | **R_{c1} (en mm)** | **Rₓ₁ (en mm)** | **Rₓ₂ (en mm)** | **D₁/D₂** |
|---|---|---|---|---|---|---|---|---|---|
| 2.00-17 | 2,6 | 2,3 | 85 | 30 | 200 | 30 | 20 | 20 | 0,15 |
| 150/70-14 | 6 | 4 | 65 | 75 | 100 | 45 | 30 | 30 | 0,75 |

Le troisième mode de pliage du pneumatique 1, tel que représenté sur la figure 4, diffère de celui de la figure 2 en ce que la ligne moyenne de la tringle 5 comprend deux parties concaves P_{c1}, P_{c2}. Les parties concaves P_{c1} et P_{c2} se caractérisent par un plus petit rayon.

La ligne moyenne de la tringle 3 comprend également deux parties convexes Pₓ₁, Pₓ₂ ayant respectivement un plus petit rayon Rₓ₁ compris entre 20 et 30 mm, et Rₓ₂ compris entre 20 et 30 mm, et respectivement un centre de courbure Cₓ₁, Cₓ₂.

Sur la figure 4, la ligne moyenne de la tringle 3 comprend trois points d'inflexion I₁, I₂ et I₃ qui délimitent une partie concave d'une partie convexe et inversement.

Selon ce troisième mode de pliage, les droites D₁ et D₂, qui relient respectivement le centre de courbure C_{c1} d'une partie concave P_{c1} à chacun des centres de courbures Cₓ₁, Cₓ₂ des parties convexes Pₓ₁ et Pₓ₂, forment un angle α compris entre 95° et 130°. Les droites D₁ et D₂ ne sont pas de même longueur.

Le volume qu'occupe le pneumatique est inférieur à 80%, préférentiellement inférieur à 70% par rapport au volume occupé par les pneumatiques pliés selon des modes de compactage actuellement connus.

Le tableau III suivant rassemble les mesures effectuées sur différents pneumatiques selon la forme de pliage représentée sur la figure 4 (forme en S).

**Tableau III**

| **Dimensions du pneumatique** | **Epaisseur du flanc (en mm) E_{F}** | **Epaisseur de l'armature sommet (en mm) E_{S}** | **Angle α (en degré)** | **D₁ (en mm)** | **D₂ (en mm)** | **R_{c1} (en mm)** | **Rₓ₁ (en mm)** | **Rₓ₂ (en mm)** | **D₁/D₂** |
|---|---|---|---|---|---|---|---|---|---|
| 2.00-17 | 2,6 | 2,3 | 95 | 220 | 30 | 30 | 20 | 20 | 7,3 |
| 150/70-14 | 6 | 4 | 115 | 120 | 75 | 45 | 30 | 30 | 1,6 |

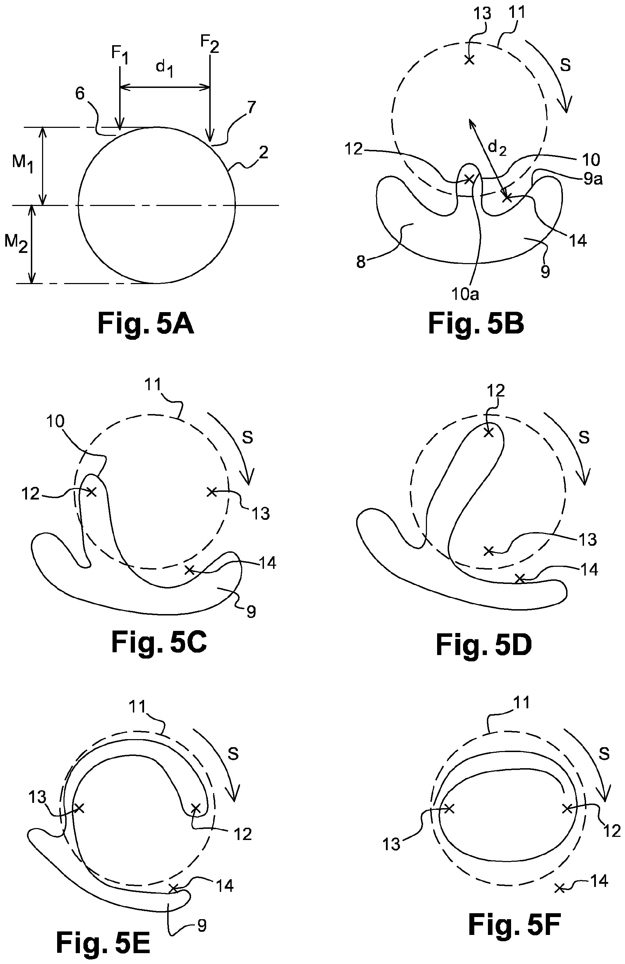

Pour obtenir un pneumatique plié selon l'invention, la méthode de pliage exposée ci-après, en référence aux figures 5A à 5F, peut être envisagée.

Dans un premier temps, on écarte, dans un plan radial, les bourrelets d'une première moitié M₁ d'un pneumatique selon une direction axiale vers un axe tangent au centre de la bande de roulement.

Comme le montre ensuite la figure 5A qui représente de manière très stylisée un pneumatique avant pliage en vue latéral, on applique ensuite une force radiale, selon deux directions parallèles F1 et F2, de sens identique, en deux points 6, 7 espacés sur la bande de roulement 2 de ladite première moitié M₁. Les deux points sont espacés d'une distance d₁ d'environ 100mm.

Comme le montre la figure 5B, l'application de cette force aux points 6 et 7 sur le pneumatique, en vue latéral, permet de rapprocher la première moitié M₁, axialement extérieure de la bande de roulement 2 de la seconde moitié M₂ opposée axialement intérieure, en ces deux points 6 et 7. Ce rapprochement permet de former simultanément une première 8 zone, une seconde zone 9 et une protubérance 10 disposée entre cesdites zones 8 et 9. Le pneumatique, ainsi préalablement préparé au pliage, ressemble sensiblement à demi-cercle comprenant dans sa partie centrale une protubérance.

Ce pneumatique pré-plié est ensuite disposé sur un moyen plan rotatif 11 sensiblement circulaire. La figure 5B représente une vue de dessus du moyen rotatif sur laquelle est disposé le pneumatique pré-plié. Ce moyen rotatif 11 comprend un premier axe 12 et un second axe 13, tous deux verticaux, diamétralement opposés, et mobiles. Un troisième axe 14 vertical, fixe est disposé à une distance d2 la plus proche du moyen rotatif 11. La distance entre les premier axe 12 et second axe 13 est de préférence égale à la longueur de la droite D2 défini précédemment sur le pneumatique plié.

Le sens S de rotation du moyen rotatif 11 est dirigé vers le second axe vertical 14 comme mentionné sur les figures 5B à 5E.

La partie interne 10a de la protubérance 10 est ensuite disposée « à cheval » de part et d'autre du premier axe 12 vertical. La partie interne 9a de la zone 9 de rapprochement du pneumatique vient simultanément en appui contre l'axe vertical 14. La seconde moitié M₂ du pneumatique est par ailleurs de préférence maintenue par un quelconque moyen dans la position pré-pliée pendant les étapes de pliage.

Le procédé de pliage du pneumatique ainsi pré-disposé fonctionne de la manière suivante.

Une fois le pneumatique pré-plié, disposé sur le moyen rotatif 11, on actionne sa rotation.

La figure 5C représente une rotation d'un quart de tour du moyen de rotatif 11 par rapport à la figure 5B. Lors de la mise en rotation de ce moyen rotatif 11 dans le sens S dirigé vers l'axe vertical 14, la protubérance 10 du pneumatique est entraînée en rotation par le premier axe vertical 12. La zone 9 est maintenue simultanément en appui contre l'axe vertical 14 pendant toute la phase de rotation.

La figure 5D, qui représente une rotation d'un demi-tour du moyen rotatif 11 par rapport à la figure 5B, montre l'enroulement progressif du pneumatique sur lui-même, la zone 9 étant toujours maintenue en appui contre l'axe vertical 14.

La figure 5E, qui représente une rotation de trois quart de tour du moyen rotatif 11 par rapport à la figure 5B, montre l'évolution de l'enroulement du pneumatique. La zone 9 est toujours maintenue en appui contre l'axe vertical 14. Contrairement à l'axe vertical 12 qui est entouré par la protubérance 10, le second axe vertical 13 permet d'entraîner et maintenir le mouvement d'enroulage du pneumatique, tout en restant totalement radialement extérieur à la bande de roulement 2.

La figure 5F représente le pneumatique totalement plié. Selon le type de pneumatique plié, il faut réaliser entre au moins un tour de rotation du moyen rotatif 11 pour le plier. De préférence, on effectuera un tour de rotation pour un pliage selon le mode de réalisation de la figure 2, et au moins un tour et demi pour un pliage selon le mode de réalisation de la figure 3.

Par exemple, pour un pneumatique de référence commercial 2.75-17 il faut effectuer une rotation comprenant un tour et demi du moyen rotatif.

A l'issue du pliage, le pneumatique peut éventuellement être maintenu plié par tout moyen de maintien qui peut être mis en place de manière automatique et/ou manuelle.

## Revendications

1. Pneumatique pliable pour véhicule à deux roues de type moto comportant une armature de carcasse (6) surmontée radialement à l'extérieur d'une éventuelle armature de sommet inextensible, elle-même radialement à l'intérieur d'une bande de roulement (2), lesdites armatures (6) étant chacune constituées d'au moins une couche d'éléments de renforcement, ladite bande de roulement (2) étant reliée à deux bourrelets (6) par l'intermédiaire de deux flancs (3), lesdits bourrelets (4) étant destinés à entrer en contact avec une jante, chaque bourrelet (4) comportant au moins un élément de renforcement circonférentiel (5) inextensible, appelé tringle, ladite tringle (5) définissant une ligne moyenne formant une courbe fermée sensiblement circulaire dans un plan circonférentiel, lesdits flancs (3) présentant une épaisseur comprise entre 2,6 et 7 mm et ladite armature de sommet présentant une épaisseur comprise entre 2 et 7 mm, **caractérisé en ce que** la tringle (5) de chaque bourrelet (4) est flexible, **en ce qu**'après pliage du pneumatique, la ligne moyenne de la tringle (5) comprend au moins une partie concave P_{c} de plus petit rayon R_{c} et de centre de courbure C_{c} **et en ce que** la tringle comprend au moins un câble métallique, non fretté dont la teneur en carbone est comprise entre 0,5 et 0,9%.

2. Pneumatique selon la revendication 1, **caractérisé en ce que** la ligne moyenne de la tringle comprend en outre au moins deux points d'inflexion I₁, I₂ délimitant la partie concave P_{c}.

3. Pneumatique selon l'une des revendications 1 ou 2, **caractérisé en ce que** la ligne moyenne de la tringle (3) comprend en outre au moins deux parties convexes Pₓ₁, Pₓ₂ ayant deux plus petits rayons Rₓ₁, Rₓ₂ et deux centres de courbure Cₓ₁, Cₓ₂, **et en ce que** des droites D₁, D₂ reliant respectivement le centre de courbure C₁ de la partie concave P_{c} à chacun des centres de courbures Cₓ₁, Cₓ₂ des parties convexes Pₓ₁, Pₓ₂, forment un angle α compris entre 5° et 130°.

4. Pneumatique selon l'une des revendication 1 à 3, **caractérisé en ce que** la ligne moyenne de la tringle (5) de chaque bourrelet (3) est formée par enroulement d'un câble métallique, formé de filaments, saturé et non fretté, **en ce que** le diamètre du câble est inférieur à 1,5mm et **en ce que** le diamètre du filament est inférieur à 0,22mm.

5. Pneumatique selon l'une des revendications 1 à 4, **caractérisé en ce qu**'après son pliage, la ligne moyenne de la tringle (5) comprend une partie concave P_{c} de plus petit rayon R_{c1} et de centre de courbure C_{c1}, **en ce qu**'elle comprend deux parties convexes Pₓ₁, Pₓ₂, respectivement de plus petits rayons Rₓ₁, Rₓ₂, et de centres de courbures Cₓ₁, Cₓ₂, **et en ce que** les droites D₁, D₂ reliant respectivement le centre de courbure C_{c1} de la partie concave P_{c} à chacun des centres de courbures Cₓ₁, Cₓ₂, de la partie convexe Pₓ forment un angle αcompris entre 5 et 40°.

6. Pneumatique selon l'une des revendications 1 à 3, **caractérisé en ce qu**'après son pliage, la ligne moyenne de la tringle (5) comprend une partie concave P_{c} de plus petit rayon R_{c1} et de centre de courbure C_{c1,} **en ce qu**'elle comprend deux parties convexes P_{x1,} Pₓ₂, respectivement de plus petits rayons R_{x1,} Rₓ₂, et de centres de courbures Cₓ₁, Cₓ₂, **en ce que** les droites D₁, D₂ reliant respectivement le centre de courbure C_{c} de la partie concave P_{c} à chacun des centres de courbures Cₓ₁, Cₓ₂, de la partie convexe Pₓ forment un angle α compris entre 50 et 85°.

7. Pneumatique selon l'une des revendications 1 à 3, **caractérisé en ce qu**'après son pliage, la ligne moyenne de la tringle (5) comprend deux parties concaves P_{c1}, P_{c2} respectivement de plus petits rayons R_{c1}, R_{c2} et de centres de courbures C_{c1}, C_{c2}, en ce **qu**'elle comprend deux parties convexes Pₓ₁, Pₓ₂, respectivement de plus petits rayons Rₓ₁, Rₓ₂, et de centres de courbures Cₓ₁, Cₓ₂, **en ce que** les droites D₁, D₂ reliant respectivement le centre de courbure C_{c1} d'une partie concave à chacun des centres de courbures Cₓ₁, Cₓ₂, des parties convexes Pₓ₁, Pₓ₂ forment un angle α compris entre 95° et 130°.

8. Pneumatique selon l'une des revendications 1 à 7, **caractérisé en ce qu**'après pliage, le rapport D₁/D₂ tend vers zéro ou vers l'infini.

9. Pneumatique selon l'une des revendications 1 à 7, **caractérisé en ce qu**'après pliage, il occupe un volume inférieur à 65% par m³ par rapport au mode de conditionnement par chaînage.

10. Procédé pour plier un pneumatique selon l'une des revendications 1 à 6, 7 ou 8, **caractérisé en ce qu**'il consiste à :
a- écarter, dans un plan radial, les bourrelets d'une première moitié d'un pneumatique selon une direction axiale vers un axe tangent au centre de la bande de roulement,
b- à appliquer une force selon deux directions radiales, parallèles et de sens identique, en deux points espacés de la bande de roulement (2) d'une première moitié (M₁) de manière à rapprocher la première moitié (M₁) de la bande de roulement (2) écartée d'une seconde moitié (M₂) opposée de la première moitié (M₁) en cesdits deux points, formant ainsi un première (8) et une seconde (9) zone de rapprochement, tout en maintenant simultanément la bande de roulement (2) entre cesdits deux points sous la forme d'une protubérance (10),
c- à disposer la partie interne (10a) de ladite protubérance (10) de part et d'autre d'un premier axe vertical (12), et simultanément à mettre en appui sur un troisième axe (14) vertical, fixe une desdites zones de rapprochement (8, 9), ledit premier axe (12) étant disposé diamétralement à un second axe (13), lesdits premier et second axes verticaux (12, 13) étant placés sur un moyen plan (11) pouvant fonctionner en rotation,
d- à effectuer au moins une rotation du moyen plan (11) afin de plier par enroulage le pneumatique sur lui-même autour des premier (12) et troisième (14) axes vertical.

11. Procédé selon la revendication 10, **caractérisé en ce que** le sens de rotation du moyen plan (11) est dirigé vers le troisième axe vertical (14).

12. Utilisation du pneumatique selon l'une des revendications 1 à 9 pour véhicule de type deux roues motorisées.

## Patentansprüche

1. Zusammenklappbarer Reifen für ein zweirädriges Fahrzeug vom Motorradtyp, der eine Karkassenbewehrung (6) umfasst, die radial außen von einer nicht dehnbaren Scheitelbewehrung überlagert ist, die selbst radial im Inneren einer Laufdecke (2) liegt, wobei die Bewehrungen (6) jeweils aus mindestens einer Schicht von Verstärkungselementen bestehen, wobei die Laufdecke (2) mit zwei Wülsten (6) durch zwei Flanken (3) verbunden ist, wobei die Wülste (4) dazu bestimmt sind, mit einer Felge in Berührung zu treten, wobei jeder Wulst (4) mindestens ein umfängliches Verstärkungselement (5), das nicht dehnbar ist, Reifendraht genannt, umfasst, wobei der Reifendraht (5) eine Mittenlinie definiert, die eine in einer Umfangsebene im Wesentlichen kreisförmige geschlossene Krümmung bildet, wobei die Flanken (3) eine Stärke zwischen 2,6 und 7 mm aufweisen und die Scheitelbewehrung eine Stärke zwischen 2 und 7 mm aufweist, **dadurch gekennzeichnet, dass** der Reifendraht (5) jedes Wulstes (4) biegsam ist, dass die Mittenlinie des Reifendrahts (5) nach dem Zusammenklappen des Reifens mindestens einen konkaven Teil P_{c} mit kleinerem Radius R_{c} und Krümmungsmitte C_{c} umfasst, und dass der Reifendraht mindestens ein unbewehrtes Metallkabel umfasst, dessen Kohlenstoffgehalt zwischen 0,5 und 0,9 % liegt.

2. Reifen nach Anspruch 1, **dadurch gekennzeichnet, dass** die Mittenlinie des Reifendrahts außerdem mindestens zwei Biegestellen I₁, I₂, die den konkaven Teil P_{c} abgrenzen, umfasst.

3. Reifen nach einem der Ansprüche 1 oder 2, **dadurch gekennzeichnet, dass** die Mittenlinie des Reifendrahts (3) außerdem mindestens zwei konvexe Teile P_{x1,}Pₓ₂ aufweist, die zwei kleinere Radien Rₓ₁, Rₓ₂ und zwei Krümmungsmitten Cₓ₁, Cₓ₂ haben, und dass die Geraden D₁, D₂, die jeweils die Krümmungsmitte C₁ des konkaven Teils P_{c} mit jeder der Krümmungsmitten Cₓ₁, Cₓ₂ der konvexen Teile Pₓ₁, Pₓ₂ verbinden, einen Winkel α zwischen 5° und 130° bilden.

4. Reifen nach einem der Ansprüche 1 bis 3, **dadurch gekennzeichnet, dass** die Mittenlinie des Reifendrahts (5) jedes Wulstes (3) durch Aufwickeln eines Metallkabels, das aus Filamenten, die gesättigt und unbewehrt sind, gebildet ist, und dass der Durchmesser des Kabels kleiner ist als 1,5 mm, und dass der Durchmesser des Filaments kleiner ist als 0,22 mm.

5. Reifen nach einem der Ansprüche 1 bis 4, **dadurch gekennzeichnet, dass** die Mittenlinie des Reifendrahts (5) nach ihrem Zusammenklappen einen konkaven Teil P_{c} umfasst, der einen kleineren Radius R_{c1} und die Krümmungsmitte C_{c1} hat, und dass sie zwei konvexe Teile Pₓ₁, Pₓ₂ jeweils mit kleineren Radien Rₓ₁, Rₓ₂ und Krümmungsmitten Cₓ₁, Cₓ₂ umfasst, und dass die Geraden D₁, D₂, die jeweils die Krümmungsmitte C_{c1} des konkaven Teils P_{c} mit jeder der Krümmungsmitten Cₓ₁, Cₓ₂ des konvexen Teils Pₓ verbinden, einen Winkel α zwischen 5 und 40° bilden.

6. Reifen nach einem der Ansprüche 1 bis 3, **dadurch gekennzeichnet, dass** die Mittenlinie des Reifendrahts (5) nach ihrem Zusammenklappen einen konkaven Teil P_{c} mit kleinerem Radius R_{c1} und Krümmungsmitte C_{c1} umfasst, und dass sie zwei konvexe Teile Pₓ₁, Pₓ₂ jeweils mit kleineren Radien Rₓ₁, Rₓ₂ und Krümmungsmitten Cₓ₁, Cₓ₂ umfasst, dass die Geraden D₁, D₂, die jeweils die Krümmungsmitte C_{c} des konkaven Teils P_{c} mit jeder der Krümmungsmitten Cₓ₁, Cₓ₂ des konvexen Teils Pₓ verbinden, einen Winkel α zwischen 50 und 85° bilden.

7. Reifen nach einem der Ansprüche 1 bis 3, **dadurch gekennzeichnet, dass** die Mittenlinie des Reifendrahts (5) nach ihrem Zusammenklappen zwei konkave Teile P_{c1}, P_{c2} jeweils mit kleineren Radien R_{c1}, R_{c2} und Krümmungsmitten C_{c1}, C_{c2} umfasst, und dass sie zwei konvexe Teile Pₓ₁, Pₓ₂ jeweils mit kleineren Radien Rₓ₁, Rₓ₂ und Krümmungsmitten Cₓ₁, Cₓ₂ umfasst, dass die Geraden D₁, D₂, die jeweils die Krümmungsmitte C_{c1} eines konkaven Teils mit jeder der Krümmungsmitten Cₓ₁, Cₓ₂ der konvexen Teile Pₓ₁, Pₓ₂ verbinden, einen Winkel α zwischen 95° und 130° bilden.

8. Reifen nach einem der Ansprüche 1 bis 7, **dadurch gekennzeichnet, dass** das Verhältnis D₁/D₂ nach dem Zusammenklappen zu null oder zu unendlich tendiert.

9. Reifen nach einem der Ansprüche 1 bis 7, **dadurch gekennzeichnet, dass** er nach dem Zusammenklappen ein Volumen belegt, das um 65 % pro m³ im Vergleich zu der Aufmachungsart durch Verketten kleiner ist.

10. Verfahren zum Zusammenklappen eines Reifens nach einem der Ansprüche 1 bis 6, 7 oder 8, **dadurch gekennzeichnet, dass** es aus Folgendem besteht:
a- in einer radialen Ebene Abspreizen der Wülste einer ersten Hälfte eines Reifens gemäß einer axialen Richtung zu einer die Mitte der Reifendecke tangierenden Achse,
b- Anlegen einer Kraft entlang zwei radialen Richtungen, die parallel und in identischer Ausrichtung verlaufen, an zwei voneinander beabstandeten Punkten auf der Laufdecke (2) einer ersten Hälfte (M₁), um die erste Hälfte (M₁) der abgespreizten Laufdecke (2) an diesen beiden Punkten einer zweiten Hälfte (M₂), die der ersten Hälfte (M₁) gegenüberliegt, näher zu bringen, wodurch eine erste (8) und eine zweite (9) Annäherungszone gebildet werden, während die Laufdecke (2) zur selben Zeit zwischen diesen beiden Punkten in Form eines Vorsprungs (10) gehalten wird,
c- Anordnen des inneren Teils (10a) des Vorsprungs (10) beidseits einer ersten vertikalen Achse (12) und gleichzeitig Verursachen einer Anlage einer der Annäherungszonen (8, 9) an einer festen dritten vertikalen Achse (14), wobei die erste Achse (12) diametral zu einer zweiten Achse (13) angeordnet ist, wobei die erste und die zweite vertikale Achse (12, 13) auf ein flaches Mittel (11) platziert werden, das in Drehung funktionieren kann,
d- Bewirken mindestens einer Drehung des flachen Mittels (11) zum Zusammenklappen des Reifens durch Aufwickeln des Reifens um die erste (12) und die dritte (14) vertikale Achse.

11. Verfahren nach Anspruch 10, **dadurch gekennzeichnet, dass** die Drehrichtung des flachen Mittels (11) zur dritten vertikalen Achse (14) gerichtet ist.

12. Verwenden des Reifens nach einem der Ansprüche 1 bis 9 für ein Fahrzeug vom zweirädrigen Motorfahrzeugtyp.

## Claims

1. Collapsible tyre for a two-wheeled vehicle of the motorbike type, comprising a carcass reinforcement (6) surmounted radially on the outside by a possible inextensible crown reinforcement, itself radially on the inside of a tread (2), the said reinforcements (6) each consisting of at least one layer of reinforcing elements, the said tread (2) being connected to two beads (6) by two sidewalls (3), the said beads (4) being intended to come into contact with a rim, each bead (4) comprising at least one inextensible circumferential reinforcing element (5) called a bead wire, the said bead wire (5) defining a mean line forming a substantially circular closed curve in a circumferential plane, the said sidewalls (3) having a thickness comprised between 2.6 and 7 mm and the said crown reinforcement having a thickness comprised between 2 and 7 mm, **characterized in that** the bead wire (5) of each bead (4) is flexible, **in that** after the tyre has been collapsed, the mean line of the bead wire (5) comprises at least one concave part P_{c} of smaller radius R_{c} and of centre of curvature C_{c}, **and in that** the bead wire comprises at least one unwrapped metal cord the carbon content of which is comprised between 0.5 and 0.9%.

2. Tyre according to Claim 1, **characterized in that** the mean line of the bead wire further comprises at least two points of inflexion I₁, I₂ delimiting the concave part P_{c}.

3. Tyre according to one of Claims 1 and 2, **characterized in that** the mean line of the bead wire (3) further comprises at least two convex parts Pₓ₁, Pₓ₂ having two smaller radii Rₓ₁, Rₓ₂ and two centres of curvature Cₓ₁, Cₓ₂, **and in that** straight lines D₁, D₂ respectively connecting the centre of curvature C₁ of the concave part P_{c} to each of the centres of curvature Cₓ₁, Cₓ₂ of the convex parts Pₓ₁, Pₓ₂ form an angle α comprised between 5° and 130°.

4. Tyre according to one of Claims 1 to 3, **characterized in that** the mean line of the bead wire (5) of each bead (3) is formed by winding a metal cord, formed of filaments, which is saturated and unwrapped, **in that** the diameter of the cord is less than 1.5 mm **and in that** the diameter of the filament is less than 0.22 mm.

5. Tyre according to one of Claims 1 to 4, **characterized in that** after it has been collapsed, the mean line of the bead wire (5) comprises a concave part P_{c} of smaller radius R_{c1} and of centre of curvature C_{c1}, **in that** it comprises two convex parts Pₓ₁, Pₓ₂, respectively of smaller radii Rₓ₁, Rₓ₂, and of centres of curvature Cₓ₁, Cₓ₂, **and in that** the straight lines D₁, D₂ respectively connecting the centre of curvature C_{c1} of the concave part P_{c} to each of the centres of curvature Cₓ₁, Cₓ₂ of the convex part Pₓ form an angle α comprised between 5 and 40°.

6. Tyre according to one of Claims 1 to 3, **characterized in that** after it has been collapsed, the mean line of the bead wire (5) comprises a concave part P_{c} of smaller radius R_{c1} and of centre of curvature C_{c1}, **in that** it comprises two convex parts Pₓ₁, Pₓ₂, respectively of smaller radii Rₓ₁, Rₓ₂, and of centres of curvature Cₓ₁, Cₓ₂, **and in that** the straight lines D₁, D₂ respectively connecting the centre of curvature C_{c} of the concave part P_{c} to each of the centres of curvature Cₓ₁, Cₓ₂ of the convex part Pₓ form an angle α comprised between 50 and 85°.

7. Tyre according to one of Claims 1 to 3, **characterized in that** after it has been collapsed, the mean line of the bead wire (5) comprises two concave parts P_{c1}, P_{c2}, respectively of smaller radii R_{c1}, R_{c2} and of centres of curvature C_{c1}, C_{c2}, **in that** it comprises two convex parts Pₓ₁, Pₓ₂, respectively of smaller radii Rₓ₁, Rₓ₂, and of centres of curvature Cₓ₁, Cₓ₂, **and in that** the straight lines D₁, D₂ respectively connecting the centre of curvature C_{c1} of a concave part to each of the centres of curvature Cₓ₁, Cₓ₂ of the convex parts Pₓ₁, Pₓ₂ form an angle α comprised between 95° and 130°.

8. Tyre according to one of Claims 1 to 7, **characterized in that** after collapsing, the ratio D₁/D₂ tends towards zero or towards infinity.

9. Tyre according to one of Claims 1 to 7, **characterized in that** after collapsing, it occupies a volume less than 65% per m³ by comparison with the lacing mode of packaging.

10. Method for collapsing a tyre according to one of Claims 1 to 6, 7 and 8, **characterized in that** it consists:
a) in parting, in a radial plane, the beads of a first half of a tyre in an axial direction towards an axis tangential to the centre of the tread,
b) in applying a force in two parallel radial directions of identical sense, at two spaced-apart points on the tread (2) of a first half (M₁) so as to bring the first half (M₁) of the parted tread (2) closer to a second half (M₂) opposite the first half (M₁) at these the said two points, thus forming a first (8) and a second (9) closer-together zone, while at the same time keeping the tread (2) between these the said two points in the form of a protrusion (10),
c) in arranging the internal part (10a) of the said protrusion (10) on each side of a first vertical axis (12) and, at the same time, in causing to bear against a third vertical axis (14) that is fixed, one of the said closer-together zones (8, 9), the said first axis (12) being arranged diametrically to a second axis (13), the said first and second vertical axes (12, 13) being placed on a flat means (11) able to function in rotation,
d) in causing the flat means (11) to effect at least one rotation so as to collapse the tyre by coiling it on itself about the first (12) and third (14) vertical axes.

11. Method according to Claim 10, **characterized in that** the direction of rotation of the flat means (11) is directed towards the third vertical axis (14).

12. Use of the tyre according to one of Claims 1 to 9 for a vehicle of the motorized two-wheeled vehicle type.
